Europäisches Patentamt

European Patent Office

Office européen des brevets

(11) Publication number: 0 364 406
A2

# EUROPEAN PATENT APPLICATION

(21) Application number: 89810774.3

(22) Date of filing: 11.10.89

(51) Int. Cl.⁵: A01N 25/12 , A01N 25/26 , A01N 43/653

(30) Priority: 13.10.88 DE 3834875

(43) Date of publication of application:
18.04.90 Bulletin 90/16

(84) Designated Contracting States:
AT BE CH DE ES FR GB GR IT LI LU NL SE

(71) Applicant: SANDOZ AG
Lichtstrasse 35
CH-4002 Basel(CH)

(84) BE CH ES FR GB GR IT LI LU NL SE

Applicant: SANDOZ-PATENT-GMBH
Humboldtstrasse 3
D-7850 Lörrach(DE)

(84) DE

Applicant: SANDOZ-ERFINDUNGEN
Verwaltungsgesellschaft m.b.H.
Brunner Strasse 59
A-1235 Wien(AT)

(84) AT

(72) Inventor: Reuter, Karl
Moltkestrasse 34
D-7800 Freiburg(DE)

(54) Dust free compositions.

(57) Compositions of organic compounds which are substantially dust-free, and the preparation of such compositions, are described.

EP 0 364 406 A2

## DUST-FREE COMPOSITIONS

This invention relates to a substantially dust-free composition containing a particulate substance and a dust-inhibiter, and a process for the production of such a composition.

Dust is often a by-product from the production, transportation, formulation, and use of particulate substances. The existence of dust in a composition is generally undesirable, since it often poses a health risk, e.g., when it is inhaled, and a safety risk, e.g., as it is often easily ignited. These problems arise in many areas, e.g. in the production of dyestuffs, pharmaceuticals, agrochemicals, and the like.

Previous efforts at eliminating or reducing dust in particulate compositions have had various drawbacks. Although dust-inhibiting additives have previously been proposed, they often adversely effect the characteristics and properties of the particulate substance. For example, in order to produce a flowable dyestuff granule which is low in dust, dyestuffs can be granulated to a grain size of 0.5 to 1.5 mm diameter and subsequently oiled with 0.2 to 0.5 percent by weight of spooling oil (mineral oil) or hexylene glycol. However, such a process has many disadvantages: it requires relatively expensive apparatus, and it generally requires further additives such as binding agents, e.g. a lignin sulphonate, to form a granule. Moreover, it is preferable to use the spooling oil only very sparingly, so as to reduce the danger of spots of spooling oil forming on the substrate to be dyed, and to prevent the granules from caking during long-term storage. Consequently, oiled granulates are usually not completely dust-free (they generally contain 1 to 50 mg dust per 100 g of de-dusted product (measured according to a dust-measuring device from Heubach, Langelsheim, Federal Republic of Germany) and further dust forms during long-term storage.

This invention relates to a substantially dust-free composition comprising a particulate substance, e.g. a particulate organic substance such as an agricultural pesticide, and a dust-inhibitor. The dust-inhibitor is compatible with all end formulations, should preferably not be volatile and dissolves as little of the particulate substance as possible. For application as an agricultural pesticide, the dust-inhibitor should have good plant tolerance, and should not pose toxicological concerns. The composition should remain substantially dust-free even after long-term storage, and should not form lumps.

The particulate compositions obtained according to the invention are only slightly sticky, and can be easily removed from the reaction container.

They are substantially dust-free and are eminently suitable for storage, transport, further processing or formulation under conditions which are acceptable from a hygiene or health point of view. Any particles of the composition according to the invention which may have packed together to form a cake can be easily separated, dissolved, further processed and/or formulated once more.

It has now been found that a substantially dust-free composition is obtained by combining 100 parts by weight of a particulate substance and 0.1 to 20 parts by weight of a polyglycol comprising at least one of polyethylene glycol (PEG), polypropylene glycol (PPG), and copolymers and block polymers thereof (hereinafter referred to as a polyglycol of this invention).

The particulate substances contemplated by this application may be organic or inorganic, and inert or active. Such particulate substances typically have an average particle diameter of about 1 μm to 1 mm and greater, more typically from about 50 to 500 μm. Dust, as contemplated by this application, denotes particles having a diameter of less than about 60 μm. Thus, the particulate substances of this invention may have a dust fraction ranging from less than 1% by weight of the total weight of the particulate substance (i.e., only trace amounts of dust), to 100% by weight (i.e., the entire particulate substance may be dust).

This application particularly contemplates particulate substances that are biologically active, and more particularly, agricultural chemicals. Such agricultural chemicals include the class known as ergosterol biosynthesis inhibitors, e.g. such belonging to the general class of the pyrimidines such as fenarimol, triarimol and nuarimol, such belonging to the class of the morpholines such as dodemorph, tridemorph and fenpropimorph, such belonging to the class of the imidazoles such as prochloraz, vinconazole, triflumizole and imazalil, such belonging to the class of the pyridines such as pyrifenox and buthiobate, such belonging to the class of the triazoles such as cyproconazole, hexaconazole, flusilazole, etaconazole, triadimefon, triadimenol, propiconazole, dichlobutrazol, bitertanol, penconazole, and flutriafol.

The polyglycol of this invention must be capable of forming a film around individual particles of the particulate substance, into which the dust is trapped. The particulate substance is therefore prefererably insoluble in the polyglycol, or at most, only slightly soluble.

If ultimately the substantially dust-free composition of this invention is used in an aqueous formulation, it is essential that the polyglycol is sufficiently soluble or dispersible in water. If the particulate substance is an agricultural pesticide that is to be used in aqueous solution, e.g. as a water-soluble liquid or water-dispersible liquid or powder, the polyglycol should suitably have a solubility of at least 0.3 g, preferably at least 3g per liter of aqueous solution.

If the polyglycol is or contains PEG, such PEG typically has a molecular weight of 100 to 20,000, preferably 100 to 800, more preferably 200 to 400.

If the polyglycol of this invention is or contains PPG, such PPG typically has a molecular weight of 100 to 20,000, preferably 100 to 5000, more preferably 200 to 2000, more preferably 400 to 1500.

If the polyglycol of this invention is or contains a copolymer or block polymer of PPG and PEG, such copolymer or block polymer typically has a molecular weight of 1000 to 10,000. Examples of such suitable copolymers and block polymers are the surfactants Pluronic[R] PE or Pluronic[R] RPE, avalable from BASF.

If the polyglycol of this invention is a mixture of two or more components selected from PEG, PPG and copolymers and block polymers thereof, such a mixture can contain these components in any weight ratio.

In general, it is sufficient to add 0.5 to 5 parts by weight of the polyglycol of this invention to 100 parts by weight of the particulate substance in order to obtain a substantially dust-free product. For long-term storage, it is preferable to use at least 2 parts by weight of the liquid polyglycol of this invention per 100 parts by weight of the particulate substance, since some of the polyglycol will usually be absorbed by the partculate substance.

Preferred polyglycols according to the invention additionally contain 0.5 to 3 parts by weight, more preferably 1 part by weight of a thickening agent per 100 parts by weight of polyglycol. Such thickening agents tend to reduce the tack of the polyglycol, thereby reducing the propensity of compositions of this invention to form lumps. Suitable thickening agents include polyethylene glycol having a molecular weight of 20,000 to 10 million, for example 5 million.

The compositions according to the invention are obtained by combining 100 parts by weight of a particulate substance with 0.1 to 20 parts by weight of a polyglycol comprising at least one of PEG, PPG, and block polymers and copolymers thereof until a homogeneous mixture is obtained.

Optionally, the particulate substance and polyglycol may be combined with an inert liquid until a homogeneous mixture is formed, and subsequently, the inert liquid is removed. In one embodiment, the particulate substance can be suspended in an inert liquid prior to mixing with a polyglycol until a homogeneous mixture is formed. In a second embodiment, the particulate substance can be suspended in a mixture containing a polyglycol and an inert liquid until a homogeneous mixture is obtained. In either embodiment, the inert liquid is subsequently removed to produce a composition whose particulate component is coated with a polyglycol of this invention. Dust particles are seated in this polyglycol coating, and thus, the composition is substantially dust-free.

Suitable inert liquids may be either polar or nonpolar, and are preferably more volatile than the polyglycol. Such non-polar inert liquids conveniently have a boiling point of less than $150^\circ C$ at atmosphereic pressure; examples of suitable non-polar inert liquids include aromatic or aliphatic hydrocarbons such as benzene, hexane and mixtures thereof.

To avoid dust formation during the production and isolation of the particulate substance, it is generally preferable that the particulate substance is not dried after isolation, e.g. after it is precipitated or crystallized from a liquid. Since the particulate substance is, by definition, insoluble or only slightly soluble in such liquid, the types of liquids used for isolation of the particulate substance are generally suitable for use as the inert liquid of this invention.

Polyglycols of this invention which are soluble in both polar and non-polar liquids have the advantage that they can be homogeneously dispersed without problems in a non-polar inert liquid and can be ultimately used in aqueous formulations. PPG is generally more soluble in both polar and non-polar liquids than PEG. Particularly useful polyglycols of this invention, therefore, typically will contain a preponderance of PPG. In cases where it is desirable that the polyglycol contains a preponderance of PEG, the PEG may be initially dissolved in water and subsequently intensively mixed with a non-polar inert liquid to form a two-phase slurry. The homogeneous mixing of such a two-phase system is, however, more difficult than when a one-phase system exists.

Removal of the inert liquid is conveniently effected by distillation under reduced pressure. However, the pressure during distillation is not critical.

The invention is illustrated by the following examples.

## EXAMPLE 1

40 kg of cyproconazole are crystallized from a hexane solution on a suction filter and suspended in 40 kg of hexane. 1.4 kg of polypropylene glycol 1020 (Hüls Company) are added to this suspension and dispersed homogeneously by stirring. This slurry is transferred to a paddle dryer where the hexane is evaporated in 12 hours. The polypropylene glycol 1020 remains as a film on the cyproconazole crystals. The product obtained is substantially dust-free according to measurements made with a dust-measuring device by Heubach, Langelsheim, Federal Republic of Germany.

## EXAMPLE 2

16.3 kg of cyproconazole are placed in a belt mixer. 0.591 kg of polypropylene glycol 1020 (Hüls Company) are added dropwise while stirring over the course of 10 minutes until the product is completely homogeneous. The resulting moist cake does not form hard lumps even after storage for 8 weeks at 54°C and is also substantially dust-free after this time.

## EXAMPLE 3

40 kg of cyproconazole are crystallized from a hexane solution, suction filtered and made into suspension with 40 kg of hexane. This slurry is transferred to a paddle dryer and then 1.4 kg of polypropylene glycol of molecular weight of about 900 are added, and the mixture is stirred until the polypropylene glycol is homgeneously distributed. After evaporation of the hexane for about 12 hours, the non-volatile polyproplylene glycol remains as a film on the cyproconazole crystals. The product obtained is substantially dust-free according to measurements made with a dust-measuring device from Heubach, Langelsheim, Federal Republic of Germany.

## Claims

1. A substantially dust-free composition comprising 100 parts by weight of a particulate substance and from 0.1 to 20 parts by weight of a polyglycol comprising at least one of polyethylene glycol, polypropylene glycol and block polymers and copolymers thereof.

2. A substantially dust-free composition according to claim 1 wherein the polyethylene glycol has a molecular weight of 100 to 20,000, the polypropylene glycol has a molecular weight of 100 to 20,000 and the copolymer or block polymer has a molecular weight of 1000 to 10,000.

3. A substantially dust-free composition according to claim 1 or 2 comprising 100 parts by weight of a particulate substance and 0.5 to 5 parts by weight of polyglycol.

4. A substantially dust-free composition according to claims 1 to 3 wherein the polyglycol is polypropylene glycol.

5. A substantially dust-free composition according to claims 1 to 4 wherein the polypropylene glycol has a molecular weight of 100 to 5000.

6. A substantially dust-free composition according to claims 1 to 5 wherein the particulate substance is an agricultural pesticide.

7. A substantially dust-free composition according to claim 6 wherein the agricultural pesticide is an ergosterol biosynthesis inhibitor.

8. A substantially dust-free composition according to claim 6 wherein the agricultural pesticide is cyproconazole.

9. A substantially dust-free composition according to claims 1 to 8 further comprising from 0.5 to 3 parts by weight of a thickening agent per 100 parts by weight of polyglycol.

10. A substantially dust-free composition according to claim 9 wherein said thickening agent is a polyethylene glycol having a molecular weight of 20,000 to 10 million.

11. A process for producing a substantially dust-free composition comprising the step of combining 100 parts by weight of a particulate substance with 0.1 to 20 parts by weight of a polyglycol comprising at least one of polyethylene glycol, polypropylene glycol, a block polymer thereof and a copolymer thereof until a homogeneous mixture is obtained.

12. A process according to claim 11 further comprising the step of combining the particulate substance and polyglycol with an inert liquid until a homogeneous mixture is formed, and subsequently removing the inert liquid.